# EUROPEAN PATENT SPECIFICATION

(11) **EP 3 349 050 B1**
(45) Date of publication and mention of the grant of the patent: **09.09.2020**
(21) Application number: 18151258.3
(22) Date of filing: 11.01.2018
(51) Int. Cl.: G01V 5/00

(54) **INSPECTION DEVICES AND METHODS FOR DETECTING A FIREARM**
INSPEKTIONSVORRICHTUNGEN UND -VERFAHREN ZUM ERKENNEN EINER SCHUSSWAFFE
DISPOSITIFS D'INSPECTION ET PROCÉDÉS DE DÉTECTION D'UNE ARME À FEU

(30) Priority: 12.01.2017 CN 201710021569
(43) Date of publication of application: 18.07.2018
(73) Proprietor: Tsinghua University, Beijing 100084 (CN); Nuctech Company Limited, TongFang Building, Shuangqinglu, Haidian District Beijing 100084 (CN)
(72) Inventor: FU, Gang, Haidian District, Beijing 100084 (CN); ZHANG, Jun, Haidian District, Beijing 100084 (CN); GU, Jianping, Haidian District, Beijing 100084 (CN); LIU, Yaohong, Haidian District, Beijing 100084 (CN); ZHAO, Ziran, Haidian District, Beijing 100084 (CN)
(74) Representative: Yip, Matthew Wing Yu

(56) References cited:
- WO-A1-2008/009134
- WO-A1-2012/112756
- DOMINGO MERY ET AL: "Modern Computer Vision Techniques for X-Ray Testing in Baggage Inspection", IEEE TRANSACTIONS ON SYSTEMS, MAN, AND CYBERNETICS: SYSTEMS, vol. 47, no. 4, 6 December 2016 (2016-12-06), pages 682-692, XP055473372, Piscataway, NJ, USA ISSN: 2168-2216, DOI: 10.1109/TSMC.2016.2628381
- AKCAY SAMET ET AL: "Transfer learning using convolutional neural networks for object classification within X-ray baggage security imagery", 2016 IEEE INTERNATIONAL CONFERENCE ON IMAGE PROCESSING (ICIP), IEEE, 25 September 2016 (2016-09-25), pages 1057-1061, XP033016685, DOI: 10.1109/ICIP.2016.7532519 [retrieved on 2016-08-03]

## Description

### TECHNICAL FIELD

The present disclosure relates to radiation inspection technologies, and more particularly, to an inspection device and a method for detecting a firearm carried in a container or a vehicle.

### BACKGROUND

Firearms have direct lethality and great destructive power, and if the firearms are illegally carried, it may directly affect social stability and endanger people's lives and property. Detection of firearms has always been an important task in the field of security inspection. In recent years, the security situation is becoming increasingly severe and terrorist activities are increasingly rampant, which makes public security inspection become a focus of close attention to all countries in the world. Detection of prohibited articles such as weapons, explosives, drugs, etc. has always been a major task in the field of security inspection. In order to effectively prevent and combat criminal terrorist activities, all countries' police uses security inspection technologies and devices to carry out targeted security inspection on dangerous articles and prohibited articles.

Radiation imaging is currently one of the most commonly used security inspection techniques for vehicle and/or container inspection tasks. Radiation imaging is a technology which achieves observation of the interior of an object by transmitting high-energy rays through the object. Radiation imaging can reflect shapes of prohibited articles such as weapons etc. which are hidden in a vehicle and/or a container. There are currently some radiation imaging inspection systems which enable fluoroscopic inspection of a vehicle/container.

However, there are some drawbacks in the manual inspection technology. Firstly, security personnel are required to examine pictures one by one, which results in an enormous workload, and as a large number of pictures are recognized for a long time, it may necessarily cause visual fatigue and thus inevitably lead to conditions such as missed inspection or even erroneous inspection. Secondly, security personnel cannot be on duty for 24 hours, which affects timeliness of customs clearance. At present, there are some aided detection methods using the computer technology. However, in the conventional technologies, recognition must be performed based on artificially designed features using feature operators such as HAAR features, SURF features and LBP features etc. One of serious drawbacks of conventional feature extraction is that it is very difficult to design a good feature. Even if multiple features are combined, it is still difficult to achieve generalization of the features, and algorithms may fail in the face of complex and ever-changing backgrounds.

WO 2008/009134 A1 discloses a security screening system to determine if an item of luggage carries an object posing a security threat. The security screening system may comprise an input for receiving image data derived from an apparatus that subjects the item of luggage to penetrating radiation, the image data conveying an image of the item of luggage. The security screening system may also comprise a processing module for processing the image data to identify in the image a plurality of regions of interest, the regions of interest manifesting a higher probability of depicting an object posing a security threat than portions of the image outside the regions of interest. The processing module may comprise: a first processing entity for processing a first one of the regions of interest to ascertain if the first region of interest depicts an object posing a security threat; and a second processing entity for processing a second one of the regions of interest to ascertain if the second region of interest depicts an object posing a security threat. The processing of the first and second regions of interest by the first and second processing entity occurs in parallel. Different processing entities may also be used to process in parallel different sets of entries a reference database to determine if an item of luggage carries an object posing a security threat.

"Modern Computer Vision Techniques for X-Ray Testing in Baggage Inspection", Domingo Mery, et al; IEEE Transactions on System, Man, and Cybernetics: System vol. 47, 2016-12-06, attempts to make a contribution to the field of object recognition in X-ray testing by evaluating different computer vision strategies that have been proposed in the last years.

"Transfer learning using convolutional neural networks for object classification within x-ray baggage security imagery", Samet Akcay, 2016 IEEE international conference on image processing (ICIP), 2016-09-25, discusses the use of transfer learning, via the use of deep Convolutional Neural Networks (CNN) for the image classification problem posed within the context of X-ray baggage security screening and employing a transfer learning paradigm such that a pre-trained CNN, primarily trained for generalized image classification tasks where sufficient training data exists, can be specifically optimized as a later secondary process that targets specific this application domain.

WO 2012112756 A1 discloses a method of detecting an object in image data that is deemed to be a threat includes annotating sections of at least one training image to indicate whether each section is a component of the object, encoding a pattern grammar describing the object using a plurality of first order logic based predicate rules, training distinct component detectors to each identify a corresponding one of the components based on the annotated training images, processing image data with the component detectors to identify at least one of the components, and executing the rules to detect the object based on the identified components.

CN 106295668 A discusses a gun detection method, wherein pretreatment and target significance detection are performed, and the candidate areas of a target detection object are searched through color segmentation and screening of specific dimension characteristics.

### SUMMARY

In view of one or more of the problems in the related art, an inspection device as recited by claim 1 and a method for detecting a firearm in a container/vehicle as recited by claim 3 are provided in accordance with the present invention.

According to the presently claimed invention, there is proposed a method for detecting a firearm, comprising steps of: performing X-ray inspection on an inspected object to obtain a transmission image; determining a plurality of candidate regions in the transmission image using a trained firearm detection neural network; classifying the plurality of candidate regions using the firearm detection neural network to determine whether there is a firearm included in the transmission image; and marking and fusing images of the firearm in various candidate regions to obtain a position of the firearm in a case that the same firearm is included in a plurality of candidate regions.

According to an embodiment of the present disclosure, the method further comprises steps of: calculating a confidence level of including a firearm in each candidate region, and determining that there is a firearm included in a candidate region in a case that a confidence level for the candidate region is greater than a specific threshold.

According to the presently claimed invention, the firearm detection neural network is trained by the following operations: establishing sample transmission images of firearms; initializing a convolutional neural network to obtain an initial detection network; and training the initial detection network using the sample transmission images to obtain the firearm detection neural network.

According to an embodiment of the present disclosure, the method further comprises steps of: cutting a firearm part off a historical inspection image; and applying a random jitter to the cut firearm image and inserting the processed firearm image into a sample transmission image for training in an image of an inspected object which does not include a firearm.

According to an embodiment of the present disclosure, the random jitter comprises at least one of:
rotation, affine, noise addition, grayscale adjustment, and scale adjustment.

According to the presently claimed invention, there is proposed an inspection device, comprising: an X-ray inspection system configured to perform X-ray inspection on an inspected object to obtain a transmission image; a memory having the transmission image stored thereon; and a processor configured to: determine a plurality of candidate regions in the transmission image using a trained firearm detection neural network; classify the plurality of candidate regions using the detection neural network to determine whether there is a firearm included in the transmission image; and mark and fuse images of the firearm in various candidate regions to obtain a position of the firearm in a case that the same firearm is included in a plurality of candidate regions.

According to an embodiment of the present disclosure, the processor is configured to calculate a confidence level of including a firearm in each candidate region, and determine that there is a firearm included in a candidate region in a case that a confidence level for the candidate region is greater than a specific threshold.

According to the presently claimed invention, the memory has sample transmission images of firearms stored thereon, and the processor is configured to train the firearm detection neural network by the following operations: initializing a convolutional neural network to obtain an initial detection network; and training the initial detection network using the sample transmission images to obtain the firearm detection neural network.

With the above solutions, it is possible to determine more accurately that whether there is a firearm included in a container/vehicle.

### BRIEF DESCRIPTION OF THE DRAWINGS

For a better understanding of the present disclosure, the present disclosure will be described in detail according to the following accompanying drawings:
Fig. 1 is a structural diagram of an inspection device according to an embodiment of the present disclosure;
Fig. 2 is a diagram illustrating a structure of a computing device included in the inspection device illustrated in Fig. 1;
Fig. 3 is a flowchart illustrating creating a firearm sample image database according to an embodiment of the present disclosure;
Fig. 4A is an original diagram illustrating firearms according to an embodiment of the present disclosure;
Fig. 4B is a diagram illustrating increasing a number of sample images of firearms according to an embodiment of the present disclosure;
Fig. 5 is a diagram illustrating a process of creating a firearm detection network model according to an embodiment of the present disclosure;
Fig. 6 illustrates a diagram of a process of detecting firearms according to an embodiment of the present disclosure;
Fig. 7A illustrates a diagram of an X-ray transmission image obtained according to an embodiment of the present disclosure;
Fig. 7B illustrates a diagram of candidate regions detected according to an embodiment of the present disclosure;
Fig. 7C illustrates a process of inputting candidate regions into a neural network for feature extraction and classification according to an embodiment of the present disclosure;
Fig. 7D illustrates a diagram of an inspection result according to an embodiment of the present disclosure; and
Fig. 8 illustrates a flowchart of a process of updating a firearm detection model online according to an embodiment of the present disclosure.

### DETAILED DESCRIPTION

The specific embodiments of the present disclosure will be described in detail below. It should be noted that the embodiments herein are used for illustration only, without limiting the present disclosure. In the description below, a number of specific details are explained to provide better understanding of the present disclosure. However, it is apparent to those skilled in the art that the present disclosure can be implemented without these specific details. In other instances, well known structures, materials or methods are not described specifically so as not to obscure the present disclosure.

Throughout the specification, the reference to "one embodiment," "an embodiment," "one example" or "an example" means that the specific features, structures or properties described in conjunction with the embodiment or example are included in at least one embodiment of the present disclosure. Therefore, the phrases "in one embodiment," "in an embodiment," "in one example" or "in an example" occurred in various positions throughout the specification may not necessarily refer to the same embodiment or example. Furthermore, specific features, structures or properties may be combined into one or more embodiments or examples in any appropriate combination and/or sub-combination. Moreover, it should be understood by those skilled in the art that the term "and/or" used herein means any and all combinations of one or more listed items.

In view of the problems in the related art, the embodiments of the present disclosure propose a method for detecting a firearm carried in a container or a vehicle. X-ray inspection is performed on an inspected object to obtain a transmission image. Then, a plurality of candidate regions in the transmission image are determined using a trained firearm detection neural network, and the plurality of candidate regions are classified using the firearm detection neural network to determine whether there is a firearm included in the transmission image. In this way, intelligently aided detection can be performed on an image of a vehicle and/or a container which carries dangerous articles such as firearms, knives etc. based on the radiation imaging technology and the deep learning technology. It is automatically detected whether there is a suspicious firearm included in a radiation image through the deep learning algorithm. In addition, a position of a firearm in the image may also be given at the same time to help determine manually whether there is a condition that a firearm is illegally carried. When a suspicious firearm is automatically recognized from the radiation image, an alarm signal is issued and security personnel can make recognition for a second time, which can greatly reduce the workload and can be on duty for 24 hours at the same time.

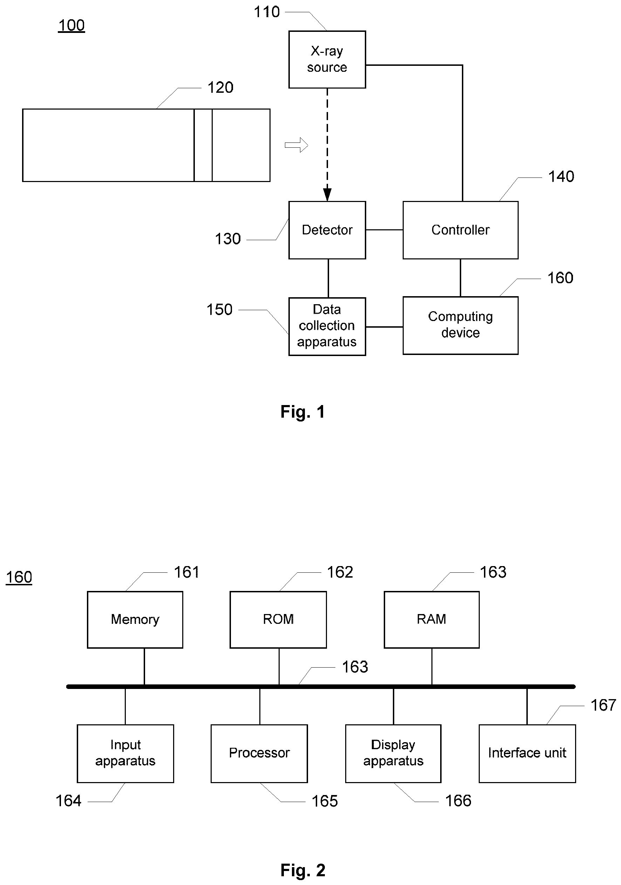

Fig. 1 illustrates a structural diagram of an inspection device according to an embodiment of the present disclosure. As shown in Fig. 1, an inspection device 100 according to an embodiment of the present disclosure comprises an X-ray source 110, a detector 130, a data collection apparatus 150, a controller 140, and a computing device 160, and performs security inspection on an inspected object 120 such as a container truck etc., for example, judges whether there are dangerous articles and/or suspicious articles such as firearms included therein. Although the detector 130 and the data collection apparatus 150 are separately described in this embodiment, it should be understood by those skilled in the art that they may also be integrated together as an X-ray detection and data collection device.

According to some embodiments, the X-ray source 110 may be an isotope, or may also be an X-ray machine, an accelerator, etc. The X-ray source 110 may be a single-energy ray source or a dual-energy ray source. In this way, transmission scanning is performed on the inspected object 120 through the X-ray source 110, the detector 150, the controller 140, and the computing device 160 to obtain detection data. For example, in a process that the inspected object 120 moves, an operator controls the controller 140 to transmit an instruction through a man-machine interface of the computing device 160 to instruct the X-ray source 110 to emit rays, which are transmitted through the inspected object 120 and are then received by the detector 130 and the data collection device 150. Further, data is processed by the computing device 160 to obtain a transmission image, further a plurality of candidate regions in the transmission image are determined using a trained firearm detection neural network, and the plurality of candidate regions are classified using the firearm detection neural network to determine whether there is a firearm included in the transmission image. In other embodiments, a position of the firearm may be marked in the image, or an image judger may be alerted that there is a firearm carried in the inspected object.

Fig. 2 illustrates a structural diagram of the computing device illustrated in Fig. 1. As shown in Fig. 2, a signal detected by the detector 130 is collected by a data collector, and data is stored in a memory 161 through an interface unit 167 and a bus 163. A Read Only Memory (ROM) 162 stores configuration information and programs of a computer data processor. A Random Access Memory (RAM) 163 is configured to temporarily store various data when a processor 165 is in operation. In addition, computer programs for performing data processing, such as a substance recognition program and an image processing program etc., are also stored in the memory 161. The internal bus 163 connects the memory 161, the ROM 162, the RAM 163, an input apparatus 164, the processor 165, a display apparatus 166, and the interface unit 167 described above.

After a user inputs an operation command through the input apparatus 164 such as a keyboard and a mouse etc., instruction codes of a computer program instruct the processor 165 to perform a predetermined data processing algorithm. After a result of the data processing is acquired, the result is displayed on the display apparatus 166 such as a Liquid Crystal Display (LCD) display etc. or is directly output in a form of hard copy such as printing etc.

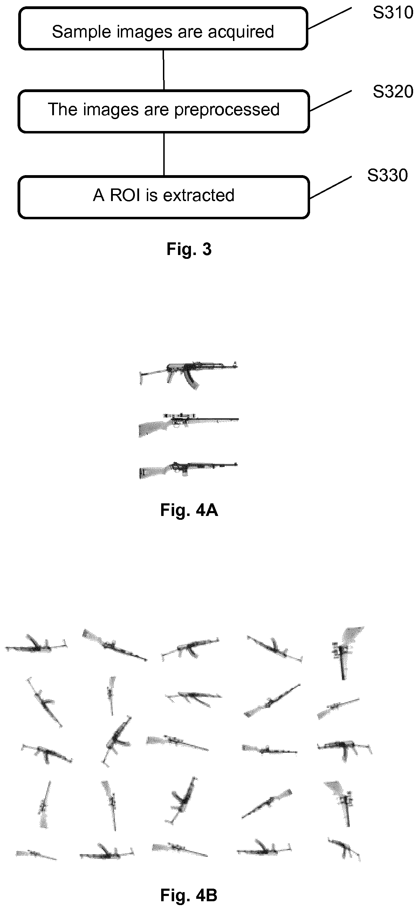

Fig. 3 is a flowchart illustrating creating a firearm sample image database according to an embodiment of the present disclosure. As shown in Fig. 3, a firearm detection database is primarily created through three steps which are image collection, image pre-processing, and Region Of Interest (ROI) extraction.

In step S310, sample images are acquired. For example, a considerable number of images of firearms from a small article machine are collected, so that an image database includes images of different numbers of firearms which are placed in various forms to obtain a firearm image library { }. The diversity of the samples is enriched, so that a firearm detection algorithm according to the present disclosure has a generalization capability.

In step S320, the images are preprocessed. For example, in order to be applicable to scanning devices of various small article machines, the images may be normalized while acquiring the images. Specifically, assuming that an original two-dimensional image signal is *X*, a normalized image *X̅* may be obtained by scaling a resolution of *X* to 5 mm/pixel according to physical parameters of a scanning device and performing grayscale stretching on *X*.

In step S330, a ROI is extracted. For example, an air part in *X̅* is detected and is excluded from a detection process, which on the one hand speeds up the operation, and on the other hand avoids a false positive in the air. For example, statistics is performed on a histogram of *X̅*, a brightest peak *a* is calculated in the histogram, a normalized air distribution (*a*, *σₐ*) with the brightest peak *a* as a center is fitted, and then a threshold is set as *tₐ* = *a* - 3 ^{∗} *σₐ.* Pixels in *X̅* which are greater than *tₐ* are considered to be air, and are not subjected to detection and calculation. In this way, in the scanned grayscale image, positions of firearms are manually marked in units of firearms and coordinates (*x,y,w,h*) of the firearms are given, where *x* and *y* represent coordinates of a lower left apex of a circumscribed rectangle of a firearm, *w* represents a width of the circumscribed rectangle, and *h* represents a height of the circumscribed rectangle.

The embodiments of the present disclosure further comprise a sample addition method. Fig. 4A is an original diagram illustrating firearms according to an embodiment of the present disclosure. Fig. 4B is a diagram illustrating increasing a number of sample images of firearms according to an embodiment of the present disclosure. For example, in view of the characteristics that it is difficult to obtain samples of firearms, the sample addition technology is used for detection of prohibited articles. The sample addition technology is to cut a firearm part off a historical image, then random jitter processing is applied to the cut firearm image and the processed firearm image is inserted into an image of a vehicle/container which does not include a firearm, so that the image of the vehicle/container is disguised as a training sample with firearms, as shown in Fig. 4B. The so-called random jitter processing is a series of image processing procedures, including but not limited to at least one of image rotation, image affine, image noise addition, image grayscale change, and image scale change.

A deep learning network according to an embodiment of the present disclosure, as a multi-layered machine learning model capable of supervised learning, combines feature extraction with classifier design. The deep learning network makes full use of features included in data by combining local sensing, weight sharing, and spatial or temporal pool sampling, to optimize a network structure and obtain a network which can extract and classify image features. Due to the use of a large number of training samples and the above-mentioned sample addition technology, it can be guaranteed that the algorithm may not fail in a case of displacement and deformation to some extent and has a stronger generalization capability.

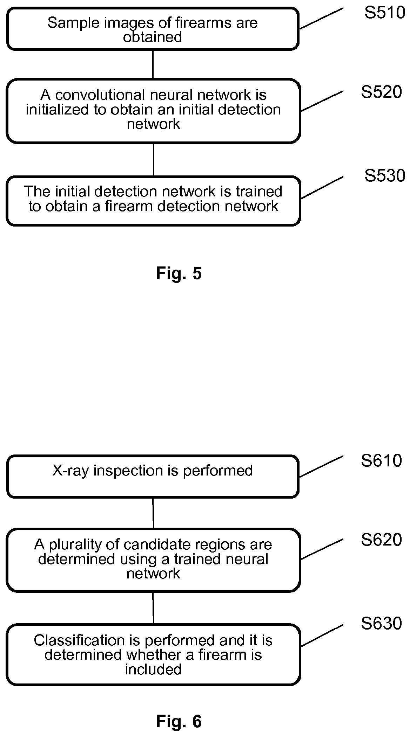

Fig. 5 is a diagram illustrating a process of creating a firearm detection network model according to the presently claimed invention.

As shown in Fig. 5, in step S510, sample transmission images of firearms are established. Then, in step S520, a convolutional neural network is initialized to obtain an initial detection network. In step S530, the initial detection network is trained using the sample transmission images to obtain a firearm detection neural network. In the field of computer vision, there are many types of neural networks, and the embodiments of the present disclosure are described by using a Convolutional Neural Network (CNN) as an example. A learning process of the convolutional neural network comprises two steps, which are output calculation (forward propagation) and parameter adjustment (reverse propagation). A network is obtained by learning sample images, that is, causing the sample images to be subjected to multi-level convolution, excitation function, pool sampling, full connection, error calculation and optimization, which ensures that the network has a minimum prediction error in a case of the current sample images. In this case, the model is considered to be an optimal model.

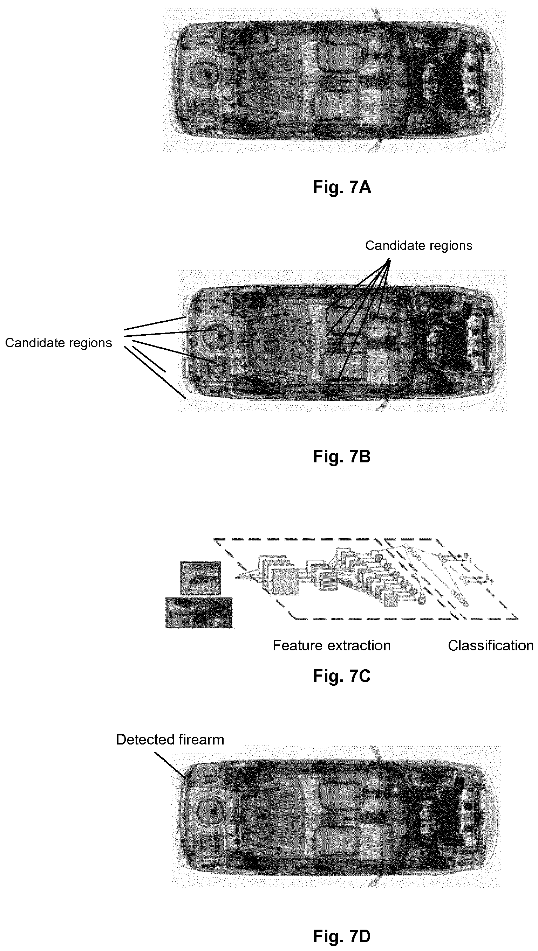

Fig. 6 illustrates a diagram of a process of detecting a firearm according to the presently claimed invention. As shown in Fig. 6, in step S610, X-ray inspection is performed on an inspected object using the inspection system illustrated in Fig. 1 to obtain a transmission image. For example, this step may further comprise an image pre-processing process. For example, some regions unrelated to a detection target, such as a blank region of the image etc., are removed. Then, conventional image processing steps such as grayscale normalization, de-noising etc. are performed. Fig. 7A illustrates a diagram of an X-ray transmission image obtained according to an embodiment of the present disclosure.

Then, in step S620, a plurality of candidate regions in the transmission image are determined using a trained firearm detection neural network. The resulting pre-processed firearm image is input into the neural network. A detection process performed by the neural network actually shares a part of processes with the model training, and does not require reverse propagation error. Candidate regions are generated in the input image. Fig. 7B illustrates a diagram of candidate regions detected according to an embodiment of the present disclosure.

In step S630, the plurality of candidate regions are classified using the firearm detection neural network to determine whether there is a firearm included in the transmission image. Fig. 7C illustrates a process of inputting candidate regions into a neural network for feature extraction and classification according to an embodiment of the present disclosure. For example, firearms in the candidate regions are classified, and if a confidence level for a candidate region is greater than a specific threshold, it is considered that there is a firearm included in the region, and the region is marked with a rectangular block. Fig. 7D illustrates a diagram of an inspection result according to an embodiment of the present disclosure.

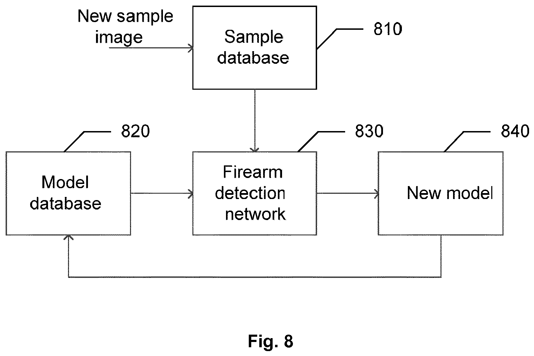

Fig. 8 illustrates a flowchart of a process of updating a firearm detection model online according to an embodiment of the present disclosure. As shown in Fig. 8, the embodiments of the present disclosure further comprise an online model update method. For example, by continuously learning samples, the neural network trained above has an increasingly stronger generalization capability, and can cope with detection of prohibited articles under various different environmental backgrounds. For example, when a new sample image including a firearm is obtained, the sample image may be input into a sample database 810, a firearm detection network reads data from a model database to initialize the detection network, and then the firearm detection network 830 learns contents of the sample image, and iteratively optimizes and updates a network parameter to obtain a new model 840 and store it in the model database 820. Here, the so-called sample is an image having a target object which has been manually marked. In this way, by learning the supervised sample data, an optimal network parameter is obtained.

In this way, according to the above embodiments, intelligently aided detection can be performed on an image of a vehicle and/or a container which carries dangerous articles such as firearms, knives etc. It is automatically detected whether there is a suspicious firearm included in a radiation image through the deep learning algorithm. In addition, a position of a firearm in the image may also be given at the same time to help determine manually whether there is a condition that a firearm is illegally carried. When a suspicious firearm is automatically recognized from the radiation image, an alarm signal is issued and security personnel can make recognition for a second time, which can greatly reduce the workload and can be on duty for 24 hours at the same time.

The foregoing detailed description has set forth various embodiments of the inspection device and the method for detecting a firearm via the use of diagrams, flowcharts, and/or examples. In a case that such diagrams, flowcharts, and/or examples contain one or more functions and/or operations, it will be understood by those skilled in the art that each function and/or operation within such diagrams, flowcharts or examples may be implemented, individually and/or collectively, by a wide range of structures, hardware, software, firmware, or virtually any combination thereof. In one embodiment, several portions of the subject matter described in the embodiments of the present disclosure may be implemented via Application Specific Integrated Circuits (ASICs), Field Programmable Gate Arrays (FPGAs), Digital Signal Processors (DSPs), or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and/or firmware would be well within the skill of those skilled in the art in ray of this disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Versatile Disk (DVD), a digital tape, a computer memory, etc.; and a transmission type medium such as a digital and/or an analog communication medium (e.g., a fiber optic cable, a waveguide, a wired communications link, a wireless communication link, etc.).

While the present disclosure has been described with reference to several typical embodiments, it is apparent to those skilled in the art that the terms are used for illustration and explanation purpose and not for limitation. The present disclosure may be practiced in various forms without departing from the scope of the present disclosure. It should be understood that the embodiments are not limited to any of the foregoing details, and shall be interpreted within the scope as defined by the following claims. Therefore, all of modifications falling within the scope of the claims are to be encompassed by the claims as attached.

## Claims

1. An inspection device, comprising:
an X-ray inspection system (100) configured to perform X-ray inspection on an inspected object to obtain a transmission image;
a memory configured to store the transmission image; and
a processor (160) configured to:
determine a plurality of candidate regions in the transmission image using a trained firearm detection neural network;
classify the plurality of candidate regions using the firearm detection neural network to determine whether there is a firearm included in the transmission image; and
mark and fuse images of the firearm in various candidate regions to obtain a position of the firearm in a case that the same firearm is included in a plurality of candidate regions;
wherein the memory is configured to store sample transmission images of firearms, and the processor (160) is configured to train the firearm detection neural network by the following operations:
initializing a convolutional neural network to obtain an initial detection network; and
training the initial detection network using the sample transmission images to obtain the firearm detection neural network; and
wherein the processor (160) is configured to create a firearm sample image database including the sample transmission images by the following operations:
acquiring sample images of firearms; and
preprocessing the sample images.

2. The inspection device according to claim 1, wherein the processor (160) is configured to calculate a confidence level of including a firearm in each candidate region, and determine that there is a firearm included in a candidate region in a case that a confidence level for the candidate region is greater than a specific threshold.

3. A method for detecting a firearm, comprising steps of:
performing (S610) X-ray inspection on an inspected object to obtain a transmission image;
determining (S620) a plurality of candidate regions in the transmission image using a trained firearm detection neural network;
classifying (S630) the plurality of candidate regions using the firearm detection neural network to determine whether there is a firearm included in the transmission image; and
in a case that the same firearm is included in a plurality of candidate regions, marking and fusing images of the firearm in various candidate regions to obtain a position of the firearm;
wherein the firearm detection neural network is trained by the following operations:
establishing (S510) sample transmission images of firearms;
initializing (S520) a convolutional neural network to obtain an initial detection network; and
training (S530) the initial detection network using the sample transmission images to obtain the firearm detection neural network;
wherein sample transmission images of firearms are established by creating a firearm detection database including the sample transmission images by the following operations:
acquiring sample images of firearms; and
preprocessing the sample images.

4. The method according to claim 3, further comprising steps of:
calculating a confidence level of including a firearm in each candidate region, and determining that there is a firearm included in a candidate region in a case that a confidence level for the candidate region is greater than a specific threshold.

5. The method according to any of claims 3 to 4, further comprising steps of:
cutting a firearm part off a historical inspection image; and
applying a random jitter to the cut firearm image and inserting the processed firearm image into a sample transmission image for training in an image of an inspected object which does not include a firearm.

6. The method according to claim 5, wherein the random jitter comprises at least one of:
rotation, affine, noise addition, grayscale adjustment, and scale adjustment.

## Patentansprüche

1. Inspektionsgerät, das Folgendes umfasst:
ein Röntgeninspektionssystem (100), konfiguriert zum Durchführen einer Röntgeninspektion an einem inspizierten Objekt, um ein Übertragungsbild zu erhalten;
einen Speicher, konfiguriert zum Speichern des Übertragungsbildes; und
einen Prozessor (160), konfiguriert zum:
Bestimmen mehrerer Kandidatenregionen in dem Übertragungsbild anhand eines trainierten neuronalen Netzwerks zum Erkennen von Feuerwaffen;
Klassifizieren der mehreren Kandidatenregionen anhand des neuronalen Netzwerks zum Erkennen von Feuerwaffen, um festzustellen, ob das Übertragungsbild eine Feuerwaffe beinhaltet; und
Markieren und Verschmelzen von Bildern der Feuerwaffe in verschiedenen Kandidatenregionen zum Erhalten einer Position der Feuerwaffe in einem Fall, in dem dieselbe Feuerwaffe in mehreren Kandidatenregionen enthalten ist;
wobei der Speicher zum Speichern von Probenübertragungsbildern von Feuerwaffen konfiguriert ist und der Prozessor (160) zum Trainieren des neuronalen Netzwerks zum Erkennen von Feuerwaffen mit den folgenden Operationen konfiguriert ist:
Initialisieren eines konvolutionalen neuronalen Netzwerks, um ein anfängliches Erkennungsnetzwerk zu erhalten; und
Trainieren des anfänglichen Erkennungsnetzwerks anhand der Probenübertragungsbilder, um das neuronale Netzwerk zum Erkennen von Feuerwaffen zu erhalten; und
wobei der Prozessor (160) zum Erzeugen einer Feuerwaffen-Probenbilddatenbank einschließlich der Probenübertragungsbilder mit den folgenden Operationen konfiguriert ist:
Erfassen von Probenbildern von Feuerwaffen; und
Vorverarbeiten der Probenbilder.

2. Inspektionsgerät nach Anspruch 1, wobei der Prozessor (160) zum Berechnen eines Konfidenzniveaus, dass eine Feuerwaffe in jeder Kandidatenregion enthalten ist, und zum Feststellen konfiguriert ist, dass in einer Kandidatenregion eine Feuerwaffe enthalten ist, falls ein Konfidenzniveau für die Kandidatenregion größer ist als ein spezifischer Schwellenwert.

3. Verfahren zum Erkennen einer Feuerwaffe, das die folgenden Schritte beinhaltet:
Durchführen (S610) einer Röntgeninspektion an einem inspizierten Objekt, um ein Übertragungsbild zu erhalten;
Bestimmen (S620) mehrerer Kandidatenregionen in dem Übertragungsbild anhand eines trainierten neuronalen Netzwerks zum Erkennen von Feuerwaffen;
Klassifizieren (S630) der mehreren Kandidatenregionen anhand des neuronalen Netzwerks zum Erkennen von Feuerwaffen, um festzustellen, ob das Übertragungsbild eine Feuerwaffe beinhaltet; und
Markieren und Verschmelzen, falls dieselbe Feuerwaffe in mehreren Kandidatenregionen enthalten ist, von Bildern der Feuerwaffe in verschiedenen Kandidatenregionen, um eine Position der Feuerwaffe zu erhalten;
wobei das neuronale Netzwerk zum Erkennen von Feuerwaffen mit den folgenden Operationen trainiert wird;
Erstellen (S510) von Probenübertragungsbildern von Feuerwaffen;
Initialisieren (S520) eines konvolutionalen neuronalen Netzwerks, um ein anfängliches Erkennungsnetzwerk zu erhalten; und
Trainieren (S530) des anfänglichen Erkennungsnetzwerks anhand der Probenübertragungsbilder, um das neuronale Netzwerk zum Erkennen von Feuerwaffen zu erhalten;
wobei Probenübertragungsbilder von Feuerwaffen durch Erzeugen einer Feuerwaffen-Erkennungsdatenbank, die die Probenübertragungsbilder enthält, mit den folgenden Operationen erstellt werden:
Erfassen von Probenbildern von Feuerwaffen; und
Vorverarbeiten der Probenbilder.

4. Verfahren nach Anspruch 3, das ferner die folgenden Schritte beinhaltet:
Berechnen eines Konfidenzniveaus, dass eine Feuerwaffe in jeder Kandidatenregion enthalten ist, und Feststellen, dass in einer Kandidatenregion eine Feuerwaffe enthalten ist, falls ein Konfidenzniveau für die Kandidatenregion größer ist als ein spezifischer Schwellenwert.

5. Verfahren nach einem der Ansprüche 3 bis 4, das ferner die folgenden Schritte beinhaltet:
Abschneiden eines Feuerwaffenteils von einem historischen Inspektionsbild; und
Anwenden von Zufalls-Jittern auf das abgeschnittene Feuerwaffenbild und Einfügen des verarbeiteten Feuerwaffenbildes in ein Probenübertragungsbild zum Trainieren in einem Bild eines inspizierten Objekts, das keine Feuerwaffe enthält.

6. Verfahren nach Anspruch 5, wobei das Zufalls-Jittern wenigstens eines der Folgenden beinhaltet:
Rotation, Affin, Rauschaddition, Graustufenanpassung und Skalenanpassung.

## Revendications

1. Dispositif d'inspection, comprenant :
un système d'inspection par rayons X (100) configuré pour réaliser une inspection par rayons X sur un objet inspecté pour obtenir une image de transmission ;
une mémoire configurée pour stocker l'image de transmission ; et
un processeur (160) configuré pour :
déterminer une pluralité de régions candidates dans l'image de transmission en utilisant un réseau neuronal de détection d'armes à feu entraîné ;
classifier la pluralité de régions candidates en utilisant le réseau neuronal de détection d'armes à feu pour déterminer la présence ou non d'une arme à feu incluse dans l'image de transmission ; et
marquer et fondre des images de l'arme à feu dans diverses régions candidates pour obtenir une position de l'arme à feu dans un cas où la même arme à feu est incluse dans une pluralité de régions candidates ;
dans lequel la mémoire est configurée pour stocker des images de transmission d'échantillon d'armes à feu, et le processeur (160) est configuré pour entraîner le réseau neuronal de détection d'armes à feu à l'aide des opérations suivantes :
l'initialisation d'un réseau neuronal convolutif pour obtenir un réseau de détection initial ; et
l'entraînement du réseau de détection initial en utilisant les images de transmission d'échantillon pour obtenir le réseau neuronal de détection d'armes à feu ; et
dans lequel le processeur (160) est configuré pour créer une base de données d'image d'échantillon d'armes à feu incluant les images de transmission d'échantillon à l'aide des opérations suivantes :
l'acquisition d'images d'échantillon d'armes à feu ; et
le pré-traitement des images d'échantillon.

2. Dispositif d'inspection selon la revendication 1, dans lequel le processeur (160) est configuré pour calculer un niveau de confiance d'une inclusion d'une arme à feu dans chaque région candidate, et déterminer le fait qu'il y ait une arme à feu incluse dans une région candidate dans un cas où un niveau de confiance pour la région candidate est supérieur à un seuil spécifique.

3. Procédé de détection d'une arme à feu, comprenant des étapes :
de réalisation (S610) d'une inspection par rayons X sur un objet inspecté pour obtenir une image de transmission ;
de détermination (S620) d'une pluralité de régions candidates dans l'image de transmission en utilisant un réseau neuronal de détection d'armes à feu entraîné ;
de classification (S630) de la pluralité de régions candidates en utilisant le réseau neuronal de détection d'armes à feu pour déterminer la présence ou non d'une arme à feu incluse dans l'image de transmission ; et
dans un cas où la même arme à feu est incluse dans une pluralité de régions candidates, de marquage et de fusion d'images de l'arme à feu dans diverses régions candidates pour obtenir une position de l'arme à feu ;
dans lequel le réseau neuronal de détection d'armes à feu est entraîné à l'aide des opérations suivantes :
l'établissement (S510) d'images de transmission d'échantillon d'armes à feu ;
l'initialisation (S520) d'un réseau neuronal convolutif pour obtenir un réseau de détection initial ; et
l'entraînement (S530) du réseau de détection initial en utilisant les images de transmission d'échantillon pour obtenir le réseau neuronal de détection d'armes à feu ; et
dans lequel les images de transmission d'échantillon d'armes à feu sont établies en créant une base de données de détection d'armes à feu incluant les images de transmission d'échantillon à l'aide des opérations suivantes :
l'acquisition d'images d'échantillon d'armes à feu ; et
le pré-traitement des images d'échantillon.

4. Procédé selon la revendication 3, comprenant en outre les étapes :
de calcul d'un niveau de confiance d'une inclusion d'une arme à feu dans chaque région candidate, et de détermination du fait qu'il y ait une arme à feu incluse dans une région candidate dans un cas où un niveau de confiance pour la région candidate est supérieur à un seuil spécifique.

5. Procédé selon l'une quelconque des revendications 3 à 4, comprenant en outre les étapes :
de découpage d'une partie d'arme à feu d'une image d'inspection historique ; et
d'application d'une fluctuation aléatoire à l'image d'arme à feu découpée et d'insertion de l'image d'arme à feu traitée dans une image de transmission d'échantillon pour un entraînement dans une image d'un objet inspecté qui n'inclut pas d'arme à feu.

6. Procédé selon la revendication 5, dans lequel la fluctuation aléatoire comprend au moins un élément parmi :
une rotation, un affinage, un ajout de bruit, un réglage de niveaux de gris, et un réglage d'échelle.
